# EUROPEAN PATENT APPLICATION

(11) **EP 2 319 754 A1**
(43) Date of publication of application: **11.05.2011**
(21) Application number: 09809163.0
(22) Date of filing: 13.03.2009
(51) Int. Cl.: B62M 23/00

(54) **PEDAL TORQUE SENSING SYSTEM FOR ELECTRIC ASSIST BICYCLE**

(30) Priority: 26.08.2008 CN 200810030374
(71) Applicant: Chen, Geping, Guangdong 528226 (CN); Zhao, Yingquan, Guangdong 528226 (CN); Liao, Xinjun, Guangdong 528226 (CN)
(72) Inventor: Chen, Geping, Guangdong 528226 (CN); Zhao, Yingquan, Guangdong 528226 (CN); Liao, Xinjun, Guangdong 528226 (CN)
(74) Representative: Beck & Rössig European Patent Attorneys
(86) International application number: PCT/CN2009/000273
(87) International publication number: WO 2010/022578

(57) **Abstract**

A pedal torque sensing system for an electric power-assist bicycle is provided, wherein the left and right pedals are concentrically fitted tightly at two ends of the crankshaft via two bearings, and the crankshaft is secured to the star frame; planetary gears of the planetary gear train are mounted round the planet gear shafts of the star frame, and mesh with both the ring gear and the sun gear; the sun gear and the transmission gear for back wheel are integrated at two ends of a same gear connecting axle which is mounted round the crankshaft via its inner axle hole; the overrunning clutch is mounted round the gear connecting shaft, and is connected with the motor shaft of the electric motor via a motor synchronization belt; an outer periphery of the ring gear is movably mounted to the casing, and the stress sensor is arranged between a wedge on the outer periphery of the ring gear and the casing, transmitting a signal to the microprocessor terminal to control operation parameters of the electric motor. The mechanism of the present invention drives the bicycle running with a combination of pedaling power from a cyclist and power from an electric motor.

## Description

### FIELD OF THE INVENTION

The present invention relates generally to means of transportation for daily life and work, and more specifically, to a pedal torque sensing system for an electric power-assist bicycle.

### BACKGROUND OF THE INVENTION

Conventional electric power-assist bicycles have abnormal phenomena of separating the cyclist from the bicycle. That is, when the electric motor of a bicycle is running, pedals of the bicycle is used just as a dummy due to the rotation speed of the electric motor higher than the pedaling speed of the cyclist, thus the cyclist cannot pedal the bicycle when the motor is working and driving the bicycle running. Once the electric power is depleted, the cyclist needs to pay much labor to pedal the bicycle. Such situation completely violates a basic definition of the electric power-assist bicycle as provisioned in national regulations. Under the conditions provisioned in the national regulations, weight of an electric power-assist bicycle cannot go beyond 40kgs, and its speed per hour cannot go beyond 25km/h, power of its electric motor cannot go beyond 250w. Further the electric power-assist bicycle is definitely limited with technical characteristics of being driven mainly by human physical pedaling, assisted with the electric motor. According to the traffic management rules, electric power-assist bicycles belong to the category of non-motorized vehicle. However, it seems the electric power-assist bicycles that are popular used currently are not belonged to this concept. When the battery is charged up, these electric power-assist bicycles move with very high speed in a short time, even sometimes challenge with motorized vehicles. Once the electric power is exhausted, pedaling of these electric power-assist bicycles are very difficult and hard, and they will interfere with ordinary bicycles, thus possibilities of traffic congestion and accidents are increased. It is disconcerting that some manufactures continue to increase motor power of the electric power-assist bicycle and enhance battery voltage and capacity in order to achieve more economic interests, causing the electric bicycles completely deviating from the normal development track. Waste batteries will also bring negative impact to ecological environment in the future.

### SUMMARY OF THE INVENTION

The present invention is intended to provide a pedal torque sensing system for an electric power-assist bicycle which is driven by a real combination of pedaling power from a cyclist and power from an electric motor.

According to an aspect of the invention, a pedal torque sensing system for an electric power-assist bicycle is provided, comprising a left pedal and a right pedal, and further comprising an electric motor, a motor synchronization belt, a sensor, a crankshaft, a star frame, a sun gear, a planetary gear train, a ring gear, a casing used as supporting member, a microprocessor terminal, an overrunning clutch, and a transmission gear for back wheel, wherein the left and right pedals are concentrically fitted tightly at two ends of the crankshaft via two bearings, and the crankshaft is secured to the star frame via a taper key; planetary gears of the planetary gear train are evenly distributed and mounted round the planet gear shafts of the star frame, and mesh with both the ring gear and the sun gear; the sun gear and the transmission gear for back wheel are integrated at two ends of a same gear connecting axle which is mounted round the crankshaft via its inner axle hole; the overrunning clutch is mounted round the gear connecting shaft, and is connected with the motor shaft of the electric motor via a motor synchronization belt; an outer periphery of the ring gear is movably mounted to the casing, and the stress sensor is arranged between a wedge on the outer periphery of the ring gear and the casing, transmitting a signal to the microprocessor terminal via conducting wires, and the microprocessor terminal outputs the processed signal to the electric motor via conducting wires and controls operation parameters of the electric motor.

According to another aspect of the invention, a pedal torque sensing system for an electric power-assist bicycle is provided, comprising a left pedal and a right pedal, and further comprising an electric motor, a motor synchronization belt, a sensor, a crankshaft, a star frame, a sun gear, a planetary gear train, a ring gear, a casing used as supporting member, a microprocessor terminal, an overrunning clutch, and a transmission gear for back wheel, wherein the left and right pedals are concentrically fitted tightly at two ends of the crankshaft via two bearings, and the crankshaft is secured to the star frame via a taper key; planetary gears of the planetary gear train are evenly distributed and mounted round the planet gear shafts of the star frame, and mesh with both the ring gear and the sun gear; the sun gear and the transmission gear for back wheel are integrated at two ends of a same gear connecting axle which is mounted round the crankshaft via its inner axle hole; the overrunning clutch is mounted round the gear connecting shaft, and is connected with the motor shaft of the electric motor via a motor synchronization belt; a guide hole is provided on the casing, and a guide bolt is movably mounted in the guide hole, wherein a wedge on the outer periphery of the ring gear contacts against one end of the guide bolt, while the other end of the guide bolt presses to a swing arm located outside the casing, the swing arm is mounted on the outer wall of the casing via a swing arm seat; a dynamometer and a stress sensor are equipped on the swing arm, the stress sensor transmits a signal to the microprocessor terminal via conducting wires, and the microprocessor terminal outputs the processed signal to the electric motor via conducting wires and controls operation parameters of the electric motor.

Working principle of the present invention is described as below. When a cyclist applies force to the pedal arm, the crankshaft secured to the pedal arm will revolve round the bearings of the bicycle frame. The planet gear shaft in the speed change mechanism is fixed round the crankshaft. The planetary gears are evenly distributed and movably mounted on the star frame round the planet gear shaft, and revolve along the track of the ring gear. A stopper on the outer periphery of the ring gear and the casing are used as a static support of the planetary gear transmission mechanism. The planetary gears on the star frame drive the sun gear movably mounted on the crankshaft rotating with a speed difference. Then the rotating sun gear drives the back wheel of the bicycle running via the synchronization belt or chain wheel. Since the ring gear and the casing form a torque support point in the transmission mechanism, the ring gear will generate inverse rotation momentum when the cyclist applies force to the pedal arm, while the casing used as a support point will restrict its rotation, thereby an instant transitional fault space is formed between the ring gear and the casing due to physical relation of a action force and a reaction force. The stress sensor is arranged in the fault space so as to correctly detect the linear value of the torque applied by the cyclist on the pedal arm. This linear digital signal is then processed by the microprocessor terminal to control operation parameters of the motor efficiently, thus the motor is in an ideal man-machine intelligent work mode. Working instructions of the DC motor completely depends on the variable signal value generated when force is applied to the pedal arm by the cyclist. Therefore, the real concept of electric power assistance of the electric bicycle is achieved. Since the first bicycle came into the world in Britain, development to the bicycles mainly focus on optimization of the inertia generated when riding the bicycle. When riding the bicycle with power off, the electric motor and the transmission mechanism are automatically switched to maintain the inertia of the bicycle perfectly.

With the present invention, the intelligent torque sensing system converts torque force applied to the pedals of the bicycle by the cyclist into a linear digital signal and transmits it to the motor control terminal so as to provide intelligent control to the motor. Therefore, the basic definition of electric power-assist bicycle is really achieved, the bicycle is driven by a combination of power from the cyclist and power from the electric motor. During riding the bicycle, the torque value applied on the pedal arms by the cyclist is acquired accurately and converted into a linear digital signal to drive the motor providing assistant power properly. In addition, the advantage of the inertia is fully utilized by the bicycle. When the cyclist does not need assistance of the electric motor, the bicycle may be power off and automatically switch to non-assistance riding status. In this regard, the bicycle having the "DYPT" pedal torque sensing system is just like an advanced bicycle, having the same driving efficiency, running speed and other all related functions, that is , it is easy to ride and is environmental friendly, having profound social significance and economic benefits. The electric power-assist bicycle with the pedal torque sensing system in accordance with the present invention are proved experimentally that the whole weight is about 19kgs, the speed per hour is limited below 25Km by pedaling with assistance from the electric motor. With a 24V-16Ah Ni-MH battery driving a 80W DC motor, the riding distance is about 200Kms (30% of the coasting distance is not counted) through power from a cyclist and the DYPT torque sensing system with a configuration of 1/2 assistance program. This completely conforms to the basic definition of electric power-assist bicycles as provisioned by the national public security and transport ministries.

### BRIEF DESCRIPTION OF THE DRAWINGS

The accompanying drawings illustrate one or more embodiments of the invention and, together with the written description, serve to explain the principles of the invention, and wherein:
Fig. 1 is a structural diagram of a preferred embodiment of the present invention.
Fig. 2 is a principle diagram illustrating an indirect sensing manner of the present invention.
Fig. 3 is a principle diagram illustrating a direct sensing manner of the present invention.
Fig. 4 is a sectional view of a transmission part of the present invention.
Fig. 5 is a schematic diagram illustrating an overall shape of the folding bicycle equipped with a system in accordance with the present invention.

### DETAILED DESCRIPTION OF THE INVENTION

These and other aspects of the present invention will become apparent from the following description of the preferred embodiment taken in conjunction with the following drawings. It should be understood that the embodiments described here are only for the purposes of illustration and description and is not intended to be exhaustive or to limit the invention to the precise forms disclosed.

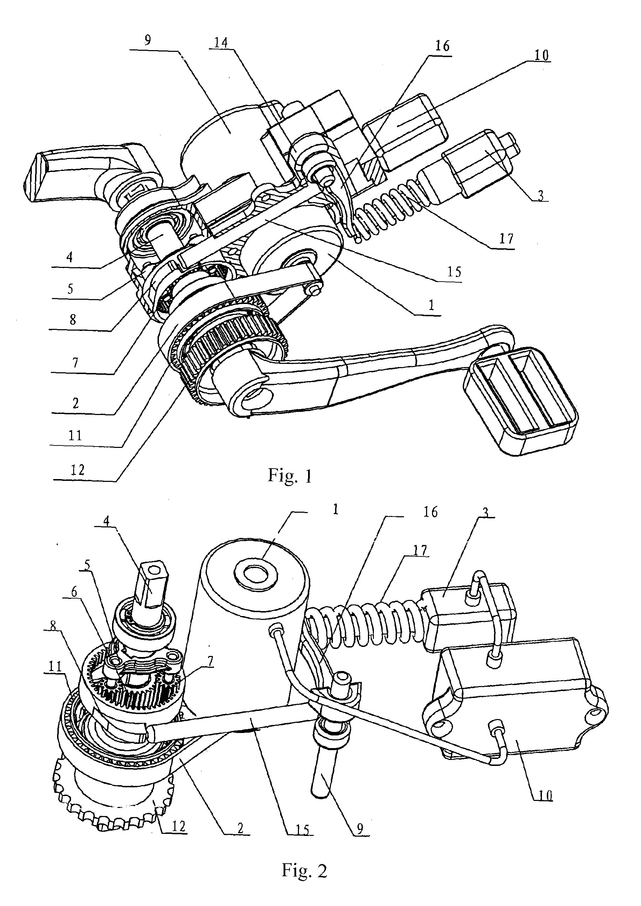

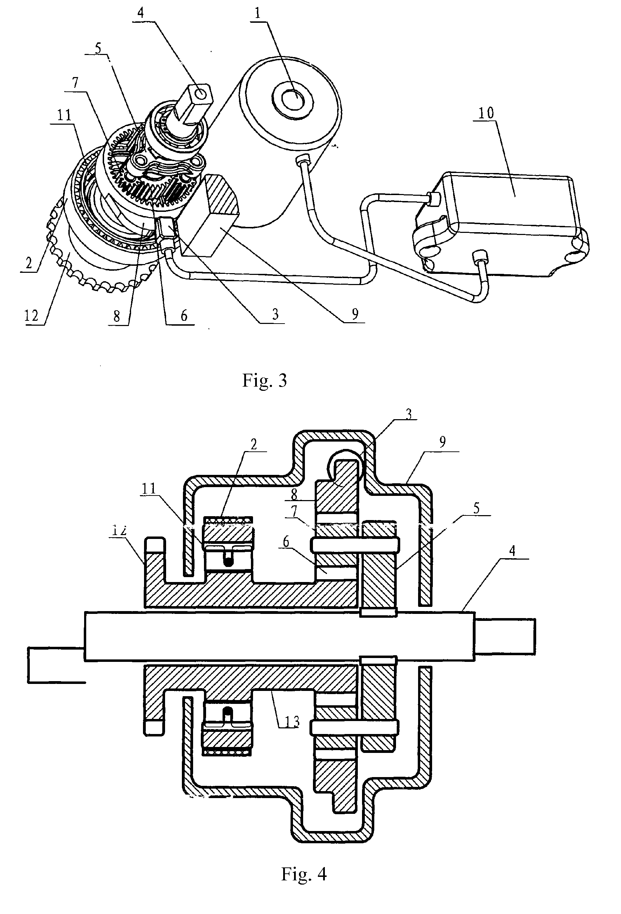

Referring to Fig. 1-Fig. 4, a pedal torque sensing system in accordance with an embodiment of the present invention comprises a left pedal and a right pedal, and further comprises an electric motor 1, a motor synchronization belt 2, a sensor 3, a crankshaft 4, a star frame 5, a sun gear 6, a planetary gear train 7, a ring gear 8, a casing 9 used as supporting member, a microprocessor terminal 10, an overrunning clutch 11, and a transmission gear for back wheel 12, wherein the left and right pedals are concentrically fitted tightly at two ends of the crankshaft 4 via two bearings, and the crankshaft 4 is secured to the star frame 5 via a taper key; the planetary gears of the planetary gear train 7 are evenly distributed and mounted round the planet gear shafts of the star frame 5, and mesh with both the ring gear 8 and the sun gear 6; the sun gear 6 and the transmission gear for back wheel 12 are integrated at two ends of a same gear connecting axle 13 which is mounted round the crankshaft 4 via its inner axle hole. In the above-mentioned structure, when the pedal arms are applied with force from the cyclist, the pedal arms drive the crankshaft 4, then the crankshaft 4 drives the star frame 5 rotating, thus the rotated star frame 5 drives the planetary gear train 7, the planetary gear train 7 drives the sun gear 6 rotating, then the transmission gear for back wheel 12 which is integrated with the rotated sun gear 6 drives the back wheel running on the road. During the above process, since the rotation direction of the planetary gears 7 is given, the ring gear 8 generates a reverse rotation momentum, while a pin connected with the casing, which is acted as supporting member, will restrict its rotation. Under action of external force, an instant transitional fault space is formed between the pin and the ring gear 8 due to the corresponding physical relation of the rotation directions of the supporting point and the ring gear 8. In the fault space, indirect or direct sensing manner and structure may be adapted according to the design requirements of the bicycle (e.g., cost of the sensor) to realize a dynamic reflection of torque. In the direct sensing manner, a sensor 3 is directly arranged between the ring gear 8 and the casing 9 to collect digital signal; the outer periphery of the ring gear 8 is movably mounted to the casing 9; the stress sensor 3 transmits the signal to the microprocessor terminal 10 via conducting wires; the processed signal is transmitted from an output port of the microprocessor terminal 10 to the electric motor 1 via conducting wires, and controls operation parameters of the electric motor. In the indirect manner, a pre-sensing method is utilized, wherein the sensor 3 is arranged at other parts except for the casing 9, and a guide hole is provided on the casing 9 of the supporting member, a guide bolt 15 is movably mounted in the guide hole; a wedge on the outer periphery of the ring gear 8 contacts against one end of the guide bolt 15, while the other end of the guide bolt 15 presses to a swing arm 16 located outside the casing 9 of the supporting member; the swing arm 16 is mounted on the outer wall of the casing 9 via a swing arm seat 14; a dynamometer 17 and a stress sensor 3 are equipped on the swing arm 16; the torque value transmitted via the guide bolt 15 is converted into a linear digital signal, which is inputted to the data processing terminal 10 to control the operation parameters of the electric motor 1, thus intelligent motor power assistance is achieved. The overrunning clutch 11 is mounted round the gear connecting shaft 13 between the sun gear 6 and the transmission gear for back wheel 12, and is connected with the motor shaft of the electric motor via a motor synchronization belt 2. The crankshaft 4, the DC motor 1, and the overrunning clutch 11 are driven by the motor synchronization belt 2. When an assistance signal is generated (i.e., power from the cyclist is applied), the DC motor runs according to the value of the processed signal. When the assistance signal disappears, the electric motor 1 completely stops (an alternate delay signal may be provided to maintain the motor running in consideration of the real power-assist characteristics). When the electric motor 1 stops running, that is, when the applied pedaling force from the cyclist is removed, the bicycle is still in the running status due to the effect of inertia. Since the overrunning clutch 11 is automatically separated from the electric motor 1, the resistance force is significantly reduced, and the inertia energy of the bicycle is fully used, thereby the riding distance of the bicycle without power consumption is increased. On the contrary, when the cyclist rides the bicycle without an assistance of the electric motor, he only needs to turn off the power supply. Since the overrunning clutch 11 is separated from the DC motor 1, pedaling the bicycle is very easy, just like pedaling an ordinary bicycle.

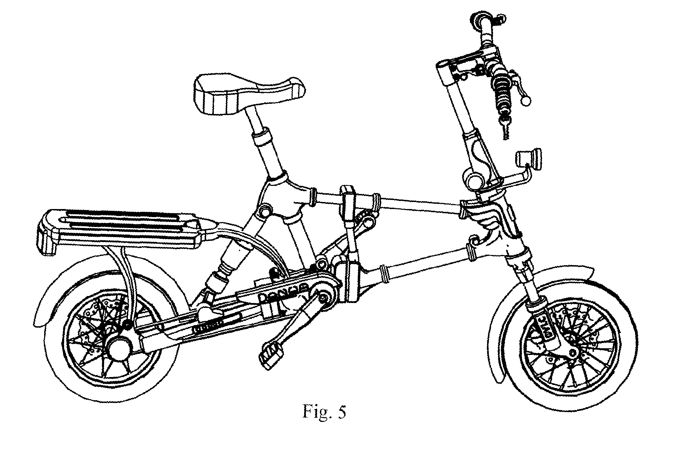

As shown in Fig. 5, in consideration of the low weight of the electric power-assist bicycle which is only about 19kgs (including the battery), the pedal torque sensing system of the present invention is equipped on a folding bicycle. A battery box of the electric folding bicycle is arranged in the rear rack, and a front wheel and a rear wheel of the bicycle can be folded parallelly through a synchronization mechanism. The electric motor and the sensor means could be arranged within the casing of the crankshaft, thus the linkage of the motor and the speed change mechanism is shortened, so under that relative condition the reasonable gravity of the bicycle will be achieved. The casing for the crankshaft and the speed change mechanism in the system are produced with aluminum alloy in order to reduce weight of the bicycle. The transmitting shafts are equipped with bearings, and the gears are manufactured with high strength alloy steel. The star frame is only used as a support of the planet gear shafts without subject to direct transmission friction, thus it is molded from polymer materials, which can result in a low weight and also provide a flexible linkage function in the speed change system. The electric motor may use a 12~24V, 70-90W DC motor. The battery may be a 12~24V, 8~16Ah Ni-MH battery or lithium battery. The DC motor should be mounted in the casing to prevent from corrosion by dust and rain.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A pedal torque sensing system for an electric power-assist bicycle, comprising a left pedal and a right pedal, and further comprising an electric motor (1), a motor synchronization belt (2), a sensor (3), a crankshaft (4), a star frame (5), a sun gear (6), a planetary gear train (7), a ring gear (8), a casing (9) used as supporting member, a microprocessor terminal (10), an overrunning clutch (11), and a transmission gear for back wheel (12), wherein
the left and right pedals are concentrically fitted tightly at two ends of the crankshaft (4) via two bearings, and the crankshaft (4) is secured to the star frame (5) via a taper key;
planetary gears of the planetary gear train (7) are evenly distributed and mounted round the planet gear shafts of the star frame (5), and mesh with both the ring gear (8) and the sun gear (6);
the sun gear (6) and the transmission gear for back wheel (12) are integrated at two ends of a same gear connecting axle (13) which is mounted round the crankshaft (4) via its inner axle hole;
the overrunning clutch (11) is mounted round the gear connecting shaft (13), and is connected with the motor shaft of the electric motor via a motor synchronization belt (2);
an outer periphery of the ring gear (8) is movably mounted to the casing (9), and the stress sensor (3) is arranged between a wedge on the outer periphery of the ring gear (8) and the casing (9), transmitting a signal to the microprocessor terminal (10) via conducting wires, and the microprocessor terminal (10) outputs the processed signal to the electric motor (1) via conducting wires and controls operation parameters of the electric motor.

2. A pedal torque sensing system for an electric power-assist bicycle, comprising a left pedal and a right pedal, and further comprising an electric motor (1), a motor synchronization belt (2), a sensor (3), a crankshaft (4), a star frame (5), a sun gear (6), a planetary gear train (7), a ring gear (8), a casing (9) used as supporting member, a microprocessor terminal (10), an overrunning clutch (11), and a transmission gear for back wheel (12), wherein
the left and right pedals are concentrically fitted tightly at two ends of the crankshaft (4) via two bearings, and the crankshaft (4) is secured to the star frame (5) via a taper key;
planetary gears of the planetary gear train (7) are evenly distributed and mounted round the planet gear shafts of the star frame (5), and mesh with both the ring gear (8) and the sun gear (6);
the sun gear (6) and the transmission gear for back wheel (12) are integrated at two ends of a same gear connecting axle (13) which is mounted round the crankshaft (4) via its inner axle hole;
the overrunning clutch (11) is mounted round the gear connecting shaft (13), and is connected with the motor shaft of the electric motor via a motor synchronization belt (2);
a guide hole is provided on the casing (9), and a guide bolt (15) is movably mounted in the guide hole, wherein a wedge on the outer periphery of the ring gear (8) contacts against one end of the guide bolt (15), while the other end of the guide bolt (15) presses to a swing arm (16) located outside the casing (9), the swing arm (16) is mounted on the outer wall of the casing (9) via a swing arm seat (14);
a dynamometer (17) and the stress sensor (3) are equipped on the swing arm (16), the stress sensor (3) transmits a signal to the microprocessor terminal (10) via conducting wires, and the microprocessor terminal (10) outputs the processed signal to the electric motor (1) via conducting wires and controls operation parameters of the electric motor.
